# EUROPÄISCHE PATENTSCHRIFT

(11) **EP 0 990 423 B1**
(45) Veröffentlichungstag und Bekanntmachung des Hinweises auf die Patenterteilung: **12.11.2003**
(21) Anmeldenummer: 99119403.6
(22) Anmeldetag: 30.09.1999
(51) Int. Cl.: A61C 13/00

(54) **Verfahren zur Herstellung von prothetischen Formteilen für den Dentalbereich und prothetisches Formteil**
Method of manufacturing prosthetic elements for the dental field and prosthetic element
Procédé de fabrication d'éléments de prothèse pour le domaine dentaire et élément de prothèse

(30) Priorität: 02.10.1998 DE 19845506
(43) Veröffentlichungstag der Anmeldung: 05.04.2000
(73) Patentinhaber: Wieland Dental + Technik GmbH & Co. KG, 75179 Pforzheim (DE)
(72) Erfinder: Rübel, Susanne, 76307 Auerbach (DE)
(74) Vertreter: Patentanwälte Ruff, Wilhelm, Beier, Dauster & Partner

(56) Entgegenhaltungen:
- WO-A-92/07977
- US-A- 4 488 940
- US-A- 4 820 387
- US-A- 5 316 650

## Beschreibung

Die Erfindung betrifft in erster Linie ein Verfahren zur Herstellung von prothetischen Formteilen für den Dentalbereich, insbesondere von sog. Dentalgerüsten, mit Hilfe galvanischer Metallabscheidung sowie prothetische Formteile.

Es ist bereits seit längerem bekannt, daß eine elektrolytische Metallabscheidung auch mit Pulsstrom, d.h. mit von Pausen unterbrochenen Stromimpulsen, erfolgen kann. Diese Art der Metallabscheidung bezeichnet man auch als Pulse-Plating. Zum Stand der Technik kann hier beispielsweise auf den Band "Pulse-Plating" der Schriftenreihe Galvanotechnik und Oberflächenbehandlung, Leuze-Verlag, Saulgau, 1990, verwiesen werden.

Die elektrolytische Metallabscheidung mit Pulsstrom wird hauptsächlich zum Aufbringen dünner Metallschichten, beispielsweise auf dem Gebiet der Elektrotechnik und Elektronik eingesetzt. Es ist dabei bekannt, daß gegenüber der Abscheidung mit Gleichstrom durch Pulse-Plating im allgemeinen keine Erhöhung der Abscheidungsgeschwindigkeit erreicht werden kann.

Im Dentalbereich werden prothetische Formteile heute standardmäßig auch mit Hilfe galvanischer Metallabscheidung hergestellt. Man spricht hier vom sog. Galvanoforming. Dabei kommen hauptsächlich Edelmetalle wie Gold zum Einsatz. Die so hergestellten dreidimensionalen Formteile/Formkörper können für die bekannten zahnärztlichen und zahntechnischen Zwecke verwendet werden, insbesondere als sog. Dentalgerüste, auf die dann Keramik oder Kunststoff als Verblendung aufgebracht wird. Auf galvanischem Weg werden auch Formteile hergestellt, die in der Doppelkronen- und Brückentechnik eingesetzt werden. Auch eine direkte Verwendung galvanisch abgeschiedener Formkörper ist möglich.

Bei den kommerziell einsetzbaren Verfahren und Geräten für das Galvanoforming im Dentalbereich sind vergleichsweise lange Galvanisierzeiten vorgesehen, um einen Formkörper mit ausreichender Schichtdicke zu erhalten. Dies ist u.a. darauf zurückzuführen, daß an die erhaltene Schicht hohe Qualitätsanforderungen gestellt werden. So ist ein homogener Schichtaufbau und eine möglichst einheitliche Schichtdicke erforderlich, beispielsweise um die für das Aufbringen einer Keramikverblendung notwendige Brennstabilität zu gewährleisten. Auch bzgl. weiterer Eigenschaften wie Porosität, Verschleißfestigkeit, Korrosionsbeständigkeit u.a. müssen Mindestanforderungen erfüllt sein. Schließlich müssen die abgeschiedenen Schichten gerade im Dentalbereich besonderen ästhetischen Ansprüchen genügen, beispielsweise hinsichtlich des Glanzes oder der Oberflächenbeschaffenheit.

Dementsprechend liegen die Galvanisierzeiten für die Herstellung üblicher prothetischer Formteile in der Dentaltechnik bei Verwendung üblicher Galvanisierbäder im Bereich vieler Stunden. Beispielsweise betragen die Galvanisierzeiten im Falle eines vielseitig eingesetzten Goldsulfit-Bades der Anmelderin mindestens 5 bis 12 Stunden für die Herstellung üblicher Formkörper wie Inlays, Onlays, Kronen, Brücken und dergleichen.

Darüber hinaus arbeiten im Dentalbereich offensichtlich alle derzeit bekannten, kommerziell einsetzbaren Verfahren und Geräte für das Galvanoforming mit Gleichstromabscheidung.

In der US-A-4,820,387 wird ein Verfahren zur Herstellung einer Krone beschrieben, bei dem die Goldabscheidung mit Hilfe einer Pulsstromabscheidung erfolgt. Gemäß dieser Druckschrift soll die prozentuale Pulsdauer zwischen 1 % und 30 % betragen, wobei von der Anwendung einer Pulsdauer von mehr als 30 % ausdrücklich abgeraten wird. Gemäß diese, Druckschrift soll die Impulsstromdichte zwischen 1 und 20 A /dm² sein.

Die Erfindung stellt sich die Aufgabe, die Herstellung prothetischer Dentalformteile durch Galvanoforming weiter zu verbessern. Dabei soll insbesondere erreicht werden, dass die Galvanisierzeiten verringert werden können, ohne die Qualität der abgeschiedenen Schichten zu beeinträchtigen. Schließlich sollen durch die Erfindung Dentalprothetikteile zur Verfügung gestellt werden, die mindestens genauso gute Eigenschaften besitzen wie bisher bekannte Dentalprothetikteile.

Diese Aufgabe wird gelöst durch ein Verfahren mit den Merkmalen des Anspruchs 1. Bevorzugte Ausführungen sind in den abhängigen Ansprüchen 2 bis 12 dargestellt. Der Wortlaut sämtlicher Ansprüche wird hiermit durch Bezugnahme zum Inhalt der Beschreibung gemacht.

Beim erfindungsgemäßen Verfahren erfolgt die galvanische Abscheidung von Gold oder einer Goldlegierung durch Pulsstromabscheidung (pulse-plating). Die Pulsstromabscheidung kann dabei nur einen Teilschritt der galvanischen Abscheidung insgesamt bilden, d.h. es erfolgt dann auch mindestens ein Abscheideschritt unter Gleichstrom. Vorzugsweise wird die galvanische Metallabscheidung aber ausschließlich durch Pulsstromabscheidung vorgenommen.

Bei diesem Verfahren wird erfindungsgemäss aus einem Goldsulfit-Bad abgeschieden und zwar bei einer Impulsstromdichte zwischen 0,2 A/dm² und 50 A/dm².

Ein weiterer kennzeichnender parameter bei dem Verfahren nach der Erfindung ist die prozentuale Pulsdauer, d.h. das Verhältnis der Zeit, in der Strom fließt, zur Gesamtdauer der Abscheidung in Prozent. Diese Größe wird auch als Lastzyklus oder Duty-Cycle bezeichnet. Die prozentuale Pulsdauer beträgt bei der Erfindung mindestens 50 %, vorzugsweise mindestens 70 %.

Die gesamte Galvanisierzeit (Abscheidezeit) beträgt bei der Erfindung vorzugsweise weniger als 5 Stunden, insbesondere weniger als 3 Stunden. Bei weiter bevorzugten Ausführungsformen werden Galvanisierzeiten zwischen 1 Stunde und 2 Stunden erreicht. Prozentuale Pulsdauern von mindestens 70 % werden insbesondere bei Galvanisierzeiten von weniger als 3 Stunden gewählt.

Die Form der Stromimpulse ist bei der Erfindung grundsätzlich frei wählbar. Dementsprechend können alle bekannten Pulsstromformen, wie beispielsweise sinusförmige Pulsströme, bei der Abscheidung eingesetzt werden. Es kann auch mit Hilfe von unipolarer oder bipolarer (Umkehrpuls) Pulse gearbeitet werden. Auch Doppelpulse und Mehrfachpulse sowie Pulsüberlagerungen sind möglich. Zwischen einzelnen Stromimpulsen wird die Stromstärke üblicherweise, aber nicht notwendigerweise, auf Null reduziert, d.h. der Strom ausgeschaltet. Bei der Erfindung bevorzugt sind rechteckförmige oder rampenförmige Pulsformen, wobei insbesondere scharf begrenzte rechteckförmige Stromimpulse hervorzuheben sind. Letztere ermöglichen bei kurzen Galvanisierzeiten die Herstellung von Formkörpern mit glatten und glänzenden Oberflächen.

Die Impulsstromdichte liegt bei der Erfindung, wie erwähnt, zwischen 0,2 A/dm² und 50 A/dm², wobei innerhalb dieses Bereiches Werte zwischen 1 A/dm² und 20 A/dm² zu nennen sind.

Besonders bevorzugt sind Impulsstromdichten zwischen 3 A/dm² und 8 A/dm².

Die Dauer der Stromimpulse ("Einschaltzeit") und die Dauer der Strompausen ("Ausschaltzeit" bei Pausenstrom 0 oder Zeit mit reduzierter Stromdichte) kann bei der Erfindung variiert werden. Üblicherweise wird die Dauer der Stromimpulse und/oder die Dauer der Strompausen im Mikrosekunden- oder vorzugsweise im Millisekunden-Bereich liegen. Ganz allgemein kann die Dauer der Stromimpulse und die Dauer der Strompausen gleich sein, so daß während gleicher Zeiträume abwechselnd Strom fließt oder kein bzw. ein reduzierter Strom fließt. Grundsätzlich ist es auch möglich, die Dauer der Stromimpulse und/oder die Dauer der Strompausen während der Galvanisierzeit zu variieren, so daß kürzere oder längere Zeiträume, in denen Strom fließt oder kein bzw. reduzierter Strom fließt, aufeinanderfolgen, und dies in regelmäßiger oder unregelmäßiger Folge.

Die Dauer der Stromimpulse (Einschaltzeit) beträgt vorzugsweise mindestens 1 ms, insbesondere 20 ms bis 100 ms. Die Dauer der Strompausen beträgt vorzugsweise mindestens 1 ms, insbesondere mindestens 4 ms, wobei Ausschaltzeiten von 1 ms bis 20 ms, vorzugsweise 4 bis 12 ms, hervorzuheben sind.

Der Vollständigkeit halber sei wiederholt, daß es bei der Erfindung um die galvanische Abscheidung metallischer Dentalprothetikteile geht. Dementsprechend versteht es sich, daß das Galvanoforming-Verfahren (und die dazu verwendeten Geräte) u.a. auf die Dimensionen und Abmessungen derartiger Teile abgestellt ist. So besitzen derartige Teile üblicherweise zu beschichtende Oberflächen zwischen 10 mm² und 400 mm². Innerhalb dieses Bereiches sind Werte von 30 mm² bis 250 mm², insbesondere 50 mm² bis 200 mm², zu nennen. Übliche, zu beschichtende Oberflächen von Inlays und Kronen liegen zwischen 100 mm² und 200 mm². Diese Dimensionen werden bei der Auswahl der beschriebenen Verfahrensparameter wie prozentuale Pulsdauer, Impulsform, Impulsstromdichte und Dauer von Stromimpuls/Strompause berücksichtigt.

Wie bereits erwähnt, können bei dem erfindungsgemäßen Verfahren alle üblichen Dentalprothetikteile durch Galvanoforming hergestellt werden. Vorzugsweise werden prothetische Formteile mit einer Dicke von mindestens 100 µm, insbesondere mit einer Dicke zwischen 150 µm und 300 µm, durch Pulsstromabscheidung hergestellt. Derartige Dicken sind insbesondere in den Fällen erwünscht, in denen der Formkörper anschließend durch Aufbrennen von Keramik verblendet werden soll. Insbesondere bei anschließender Verblendung mit Kunststoffen können auch geringere Schichtdicken als 100 µm ausreichen.

Das erfindungsgemäße Verfahren wird vorzugsweise bei einer Temperatur, die größer ist als Raumtemperatur, durchgeführt. Insbesondere wird bei der Abscheidung das Galvanisierbad auf Temperaturen größer 30 °C, vorzugsweise zwischen 50 °C und 80 °C, erwärmt. Innerhalb des letztgenannten Bereiches sind Temperaturen zwischen 60 °C und 75 °C hervorzuheben. Durch diese Maßnahme wird unterstützt, daß bei der Erfindung eine besonders schnelle Abscheidung möglich ist.

Die galvanische Abscheidung erfolgt bei dem erfindungsgemäßen Verfahren üblicherweise aus einem sog. Galvanisierbad, welches das abzuscheidende Metall oder die abzuscheidenden Metalle in einer ausreichenden Konzentration enthält. Das abzuscheidende Metall bzw. die abzuscheidenden Metalle liegen dabei in Form von Komplexen vor. Weiter enthalten die Bäder übliche Zusätze wie Hilfsmittel für die Abscheidung, Glanzbildner oder andere. Der Einsatz wässriger Bäder ist bei der Erfindung insbesondere aus Gründen der Handhabbarkeit und des Umweltschutzes bevorzugt.

Das erfindungsgemäße Verfahren läßt sich besonders gut unter Einsatz eines wässrigen Goldsulfit-Bades durchführen, wobei dieses insbesondere einen basischen pH-Wert aufweist. Dieser pH-Wert liegt vorzugsweise im Bereich zwichen 8 und 8,5. Ein solches Goldsulfit-Bad ist weitgehend ungiftig.

Ein derartiges basisches wässriges Goldsulfit-Bad führt bei Anwendung des erfindungsgemäßen Verfahrens zu Formkörpern mit sehr gleichmäßiger Schichtdicke und geringen inneren Spannungen. Außerdem können sehr glatte, hochglänzende Oberflächen bereitgestellt werden. Diese Vorteile, insbesondere die gleichmäßigen hohen Schichtdicken, werden über die ganze Oberfläche des Formkörpers erreicht, beispielsweise auch an Stellen mit Hinterschneidungen oder konkaven Vertiefungen.

Grundsätzlich können bei dem erfindungsgemäßen Verfahren die bereits bekannten galvanischen Bäder, insbesondere die bereits bekannten kommerziell erhältlichen Goldsulfit-Bäder, eingesetzt werden. Um die Vorteile des erfindungsgemäßen Verfahrens voll zu nutzen, ist es aber bevorzugt, wenn die galvanische Abscheidung aus einem Bad erfolgt, das das abzuscheidende Metall oder die abzuscheidenden Metalle in einer höheren Konzentration enthält als die bisher bekannten üblichen Bäder. Beispielsweise enthalten übliche, zur Abscheidung von Gold oder Goldlegierungen verwendete Goldsulfit-Bäder das Gold in einer Konzentration von bis zu 30 g/l (Gramm pro Liter). Dementsprechend ist es bei dem erfindungsgemäßen Verfahren bevorzugt, wenn ein dabei verwendetes Goldsulfit-Bad eine Goldkonzentration von mehr als 30 g/l besitzt. Dabei sind Goldkonzentrationen zwischen 40 g/l und 60 g/l weiter bevorzugt. Solche Bäder mit höherer Konzentration lassen sich vom Fachmann ohne weiteres aufgrund einer entsprechenden Umrechnung herstellen, wobei auch geänderte Konzentrationen weiterer Badbestandteile wie Glanzbildner u.a. Berücksichtigung finden können.

Das Aufbringen des Pulsstromes kann bei der Erfindung in beliebiger, dem Fachmann bekannter Weise erfolgen. Dementsprechend umfaßt die Erfindung auch sämtliche Formen gepulster potentiostatischer Abscheidungen, bei denen nicht der Strom, sondern die Spannung mit entsprechenden Puls- und Pausenzeiten variiert wird. Entscheidendes Kriterium ist lediglich, daß die elektrolytische Metallabscheidung "gepulst" erfolgt.

Wie beschrieben, offenbart die Anmeldung auch das nach dem erfindungsgemäßen Verfahren durch Galvanoforming erhältliche prothetische Formteil für den Dentalbereich (Dentalprothetikteil). Dieser Formkörper ist nach dem erfindungsgemäßen Verfahren hergestellt. Er kann zusätzlich mit Keramik und/oder Kunststoff verblendet sein. Bezüglich der Merkmale und Eigenschaften dieses Dentalprothetikteils wird auf die bisherige Beschreibung verwiesen und ausdrücklich Bezug genommen.

Weiter umfaßt die Erfindung die Verwendung der Pulsstromabscheidung (pulse-plating) zur Herstellung prothetischer Formteile für den Dentalbereich. Auch hier wird ausdrücklich auf die bisherige Beschreibung verwiesen und Bezug genommen.

Die Vorteile der bisher beschriebenen Teile der Erfindung liegen u.a. darin, daß im Vergleich zu den bisher bekannten Galvanoforming-Verfahren eine wesentlich schnellere Abscheidung und damit Herstellung des Formkörpers möglich ist. Der die Abscheidung üblicherweise durchführende Zahntechniker kann damit mehr Zahnersatzteile als bisher herstellen, ohne daß die Qualität der Formkörper beeinträchtigt ist. Ganz im Gegenteil lassen sich offensichtlich Formkörper mit besserem Schichtaufbau und gleichmäßigerer Schichtdicke zur Verfügung stellen als dies bisher möglich war. Dies gilt insbesondere für Formkörper mit komplexer Struktur, d.h. solche, die beispielsweise Hinterschneidungen oder (kleine) konkave Vertiefungen aufweisen. Weiter ist als Vorteil zu nennen, daß die Anwendung des Verfahrens eine
Vielzahl weiterer Möglichkeiten zur Verfahrensführung eröffnet. So können Pulsstromdichte, Puls- und Pausenzeiten, Form des Strompulses, prozentuale Pulsdauer und andere Parameter je nach Anwendungsfall ausgewählt und optimiert werden. Dies ist bei einer Gleichstromabscheidung nicht in diesem Ausmaß möglich. So kann beispielsweise das Gefüge eingestellt werden, z.B. durch Auswahl einer mehr oder weniger feinkörnigen Struktur, oder die Oberflächenbeschaffenheit variiert werden. Bei letzterer werden häufig möglichst glatte Oberflächen erwünscht sein. Man kann jedoch bei der Erfindung auch definiert mehr oder weniger rauhe Oberflächen bereitstellen. Solche rauhen Oberflächen können dann von Vorteil sein, wenn der Formkörper nach der Abscheidung verblendet wird. Bei einer solchen Verblendung werden üblicherweise zunächst in einer Vorbehandlung Oberflächenrauhigkeiten, beispielsweise durch Partikelbestrahlung, erzeugt. Dadurch wird erreicht, daß das Verblendungsmaterial oder zugehörige sog. Bonder besser haften. Eine derartige Vorbehandlung kann bei der o.g. Herstellung von Formkörpern mit rauher Oberfläche entfallen.

Damit werden durch die Erfindung dem Galvanoforming im Dentalbereich, bei dem man sich zuletzt unter Beibehaltung der Gleichstromabscheidung und der vergleichsweise langen Galvanisierzeiten hauptsächlich auf die Optimierung der Galvanisierbäder konzentriert hatte, neue Anwendungsbereiche erschlossen.

Schließlich offenbart die Anmeldung eine Elektrolysezelle, die zur Herstellung prothetischer Formteile für den Dentalbereich (Dentalprothetikteile) mit Hilfe galvanischer Metallabscheidung (Galvanoforming) durch Pulsstrom vorgesehen ist. Insbesondere dient diese Elektrolysezelle zur Durchführung des erfindungsgemäßen Verfahrens und zur Herstellung der entsprechenden Formkörper.

Die Elektrolysezelle weist (neben anderen, für ihre Funktion notwendigen oder zweckmäßigen Bauteilen) eine äußere Anode auf. Diese ist derart ausgebildet, daß sie eine oder mehrere Kathoden mindestens teilweise, vorzugsweise im wesentlichen vollständig umschließt, und zwar längs einer die Kathode bzw. die Kathoden einschließenden Umfangslinie. Die äußere Anode ist mit anderen Worten derart ausgebildet, daß sich die Kathode oder die Kathoden "innerhalb" der Anode befinden. Bei den Kathoden handelt es sich um die Teile, die bei der Elektrolyse innerhalb der Elektrolysezelle angeordnet werden, um mit dem Metall oder den Metallen beschichtet zu werden, im vorliegenden Fall also beispielsweise um die präparierten Zahnstümpfe.

Die äußere Anode kann, solange die obengenannte Bedingung erfüllt ist, grundsätzlich jede beliebige Gestalt aufweisen. Dementsprechend können die äußeren Anoden beliebige Umfangslinien definieren, beispielsweise sternförmige, rechteckige, quadratische oder ellipsenförmige Umfangslinien. Bevorzugt ist eine äußere Anode, die zu einer im wesentlichen kreisförmigen Umfangslinie führt. Dementsprechend wird bei einer bevorzugten Ausführung der Elektrolysezelle eine zylindermantelförmige äußere Anode verwendet. Vorzugsweise kann es sich bei der zylindermantelförmigen äußeren Anode um ein sog. Anodennetz handeln, d.h. eine zylindermantelförmige Anode mit durchbrochender Struktur.

Die äußere Anode, die die Kathode oder die Kathoden in ihrem Inneren teilweise oder vollständig einschließt, kann einteilig aufgebaut sein wie die erwähnte zylindermantelförmige Anode. Die äußere Anode kann jedoch auch längs der Umfangslinie aus mehreren Anodenteilen bestehen. So ist es beispielsweise bei einer in einer kreisförmigen Umfangslinie resultierenden Anode möglich, diese aus zwei Anodenteilen mit halbkreisförmigem Querschnitt oder aus vier Anodenteilen mit viertelkreisförmigem Querschnitt auszubilden. Bei derartigen Ausführungen mit mehrteiliger äußerer Anode können zwischen den einzelnen Anodenteilen Zwischenräume verbleiben, die von der Badflüssigkeit eingenommen werden.

Die beschriebene Elektrolysezelle umfaßt vorzugsweise eine weitere innere Anode, die (wie die Kathoden) innerhalb der von der äußeren Anode definierten Umfangslinie angeordnet ist. Diese Anordnung erfolgt vorzugsweise derart, daß sich die Kathoden im Bereich zwischen der äußeren und der inneren Anode befinden.

Die innere Anode kann im Prinzip jede beliebige Form oder Gestalt aufweisen. Dementsprechend kann sie auch wie die äußere Anode ausgebildet sein, vorzugsweise auch zylindermantelförmig. Dies bedeutet, daß es sich auch bei der inneren Anode um ein Anodennetz handeln kann, das mit entsprechend kleinerem Durchmesser innerhalb der von der äußeren Anode definierten Umfangslinie angeordnet ist. Bei besonders bevorzugten Ausführungsformen handelt es sich bei der inneren Anode um einen Anodenvollstab.

Die innere Anode kann innerhalb der von der äußeren Anode definierten Umfangslinie bzgl. der Kathode oder der Kathoden im Prinzip beliebig angeordnet sein. So können sich in dem Fall, daß in der Elektrolysezelle nur eine Kathode vorgesehen ist, diese Kathode und die innere Anode gegenüberliegen. Dabei sind Kathode und innere Anode vorzugsweise symmetrisch in Bezug auf einen Mittelpunkt angeordnet, welcher durch die Umfangslinie der äußeren Anode definiert ist. Bei Ausführungen der Elektrolysezelle, bei denen mehrere Kathoden vorgesehen sind, ist die innere Anode vorzugsweise zentrisch innerhalb der von der äußeren Anode definierten Umfangslinie angeordnet. Dies hat den Vorteil, daß die Kathoden zwischen äußerer Anode und innerer Anode symmetrisch angeordnet werden können.

In Weiterbildung sind bei der Elektrolysezelle Abschirmelemente vorgesehen, die insbesondere als rohroder ringförmige Elemente ausgebildet sind. Diese Abschirmelemente sind zwischen der äußeren Anode und den Kathodenteilen und/oder zwischen der inneren Anode und den Kathodenteilen angeordnet. Durch diese Abschirmelemente wird verhindert, daß die zu beschichtenden Kathoden, insbesondere bei hohen Konzentrationen des abzuscheidenden Metalls im Elektrolysebad, zu nahe an den Anoden angeordnet sind. Bei Verwendung von rohr- oder ringförmigen Abschirmelementen ist dabei ein Stoffaustausch nur über das obere und/oder untere offene Ende der entsprechenden Bauteile möglich.

Die genannten Abschirmelemente sind vorzugsweise aus Kunststoff, insbesondere aus Teflon, gefertigt.

Die beschriebenen Merkmale und weitere Merkmale der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils für sich oder zu mehreren in Kombination miteinander verwirklicht sein. In der Zeichnung zeigen:
- Fig. 1: die schematische Darstellung eines Einsatzteils mit äußerer und innerer Anode für eine Elektrolysezelle, und
- Fig. 2: eine schematische Schnittansicht einer Elektrolysezelle.

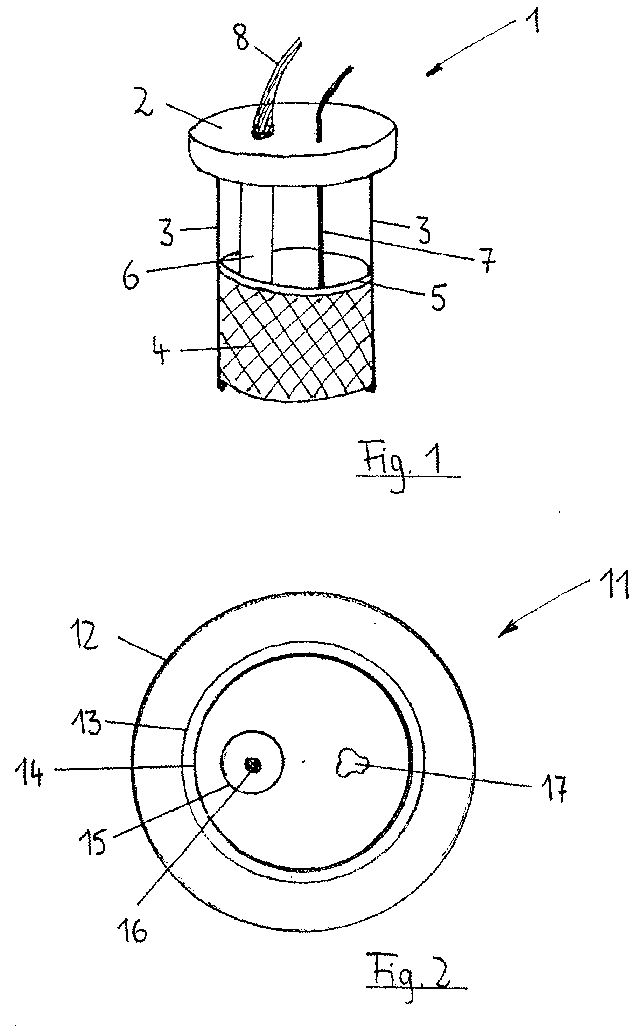

Das in Fig. 1 lediglich schematisch dargestellte Einsatzteil 1 für eine Elektrolysezelle besitzt ein flächiges Oberteil 2 nach Art eines Deckels. Dieses oberteil 2 ist zum Aufsetzen oder Einsetzen des Einsatzteiles 1 in eine Elektrolysezelle vorgesehen. In einem üblichen Fall kann die Elektrolysezelle dann aus einem Becherglas und dem Einsatzteil 1 sowie weiteren Zubehörteilen bestehen.

Das Einsatzteil 1 weist mindestens zwei langgestreckte Halteelemente 3 auf, an denen eine äußere Anode 4 in Form eines zylindermantelförmigen Netzes aus platiniertem Titan befestigt ist. Die Halteelemente 3 dienen dabei gleichzeitig als Zuleitung. Die äußere Anode 4 definiert eine kreisförmige Umfangslinie und einen innerhalb der äußeren Anode 4 gebildeten Innenraum.

Unmittelbar innerhalb der äußeren Anode 4 ist ein ebenfalls zylindermantelförmiges Abschirmelement 5 aus Teflon vorgesehen, das die äußere Anode 4 jedoch vorzugsweise nicht berührt.

In dem von der äußeren Anode 4 (und dem Abschirmelement 5) begrenzten Innenraum ist ein weiteres ebenfalls zylindermantelförmiges Abschirmelement 6, ebenfalls aus Teflon, zu erkennen. Dieses Abschirmelement 6 ist im Innenraum außermittig angeordnet. Im Inneren des Abschirmelementes 6 befindet sich eine in Fig. 1 nicht dargestellte innere Anode in Form eines Anodenstabes. Diese ist ebenfalls aus platiniertem Titan aufgebaut.

Dem Abschirmelement 6 und damit auch der inneren Anode gegenüber ist eine durch das Oberteil 2 des Einsatzteiles 1 geführte Zuleitung 7 für ein in Fig. 1 nicht dargestelltes Kathodenteil zu sehen. Vor der Elektrolyse wird an dieser Zuleitung 7 beispielsweise der präparierte und zu beschichtende Zahnstumpf befestigt.

Schließlich zeigt Fig. 1 eine weitere Zuleitung 8 für die äußere Anode 4 und die innerhalb des Abschirmelementes 6 angeordnete innere Anode. Weitere übliche Bauteile einer Elektrolysezelle sind in Fig. 1 nicht dargestellt. Bei solchen Bauteilen kann es sich beispielsweise um Temperaturfühler, Rührer, Dichtungen, Schutzringe und dergleichen handeln.

Fig. 2 zeigt eine schematische Schnittansicht einer Elektrolysezelle. Dabei weist die Elektrolysezelle 11 ein Becherglas 12 auf, das mit einer notwendigen oder zweckmäßigen Menge an Galvanisierbad gefüllt ist. Innerhalb dieses Becherglases 12 ist in Fig. 2 eine zylindermantelförmige äußere Anode 13 zu erkennen, die eine kreisförmige Umfangslinie definiert. Bei dieser äußeren Anode 13 kann es sich beispielsweise um ein platiniertes Titannetz handeln. In dem durch die äußere Anode 13 begrenzten Innenraum befindet sich benachbart zu der äußeren Anode 13 ein ebenfalls zylindermantelförmiges Abschirmelement 14 aus Teflon.

Weiter zeigt Fig. 2 ein weiteres, ebenfalls zylindermantelförmiges Abschirmelement 15, das im genannten Innenraum außermittig angeordnet ist. Innerhalb dieses Abschirmelementes 15 befindet sich eine innere Anode 16, die in Form eines Stabes aus Vollmaterial ausgebildet ist.

Dem Abschirmelement 15 und der inneren Anode 16 (symmetrisch) gegenüberliegend ist ein als Kathodenteil 17 dienender Zahnstumpf vorgesehen, der mit Hilfe des Galvanisierbades beispielsweise mit Gold zu einem Dentalprothetikteil beschichtet werden soll.

### Beispiele

Bei den folgenden drei Anwendungsbeispielen wird jeweils ein mit Keramik verblendbares (brennstabiles) Dentalprothetikteil nach dem erfindungsgemäßen Galvanoforming-Verfahren hergestellt. Das Dentalprothetikteil besitzt dabei jeweils die Form einer (Galvano-)Krone.

In allen drei Fällen wird zunächst vom sog. Meistermodell ein Duplikat des betreffenden Zahnstumpfes hergestellt. Dieser Dubliervorgang erfolgt in einer dem Fachmann bekannten Weise, beispielsweise unter Verwendung von Gips. Anschließend wird der bei der Abscheidung als Kathode geschaltete Zahnduplikatstumpf mit einer Zuleitung (z.B. Kupferstab) versehen und beispielsweise mit einem Leitsilberlack leitfähig gemacht.

Die zur Abscheidung verwendete Apparatur ist weitgehend wie in den Figuren dargestellt aufgebaut und besteht aus einem beheizbaren Magnetrührer der Firma Heidolph (Typ MR 3003), einem Temperaturfühler der Firma Heidolph (Typ EKT 3000) und einer für die Pulsstromabscheidung geeigneten Strom-/Spannungsquelle (Potentiostat/Galvanostat Modell 263A der Firma EG & G). Als Elektrolysezelle wird ein 100 ml-Becherglas mit Abdeckung sowie passendem Magnetrührstab verwendet. Die Anode besteht aus zwei Anodenteilen, nämlich einem zylindermantelförmigen Netz aus platiniertem Titan und einem im vom Netz gebildeten Innenraum zentrisch angeordneten Anodenstab, ebenfalls aus platiniertem Titan. Zur Abschirmung des Kathodenteils oder der Kathodenteile werden zwischen Netz und Kathodenteil bzw. Kathodenteil und Stab konzentrisch ein Teflonring (größerer Durchmesser) bzw. ein Teflonrohr (kleinerer Durchmesser) eingesetzt.

Bei allen drei Anwendungsbeispielen wird als Galvanisierbad ein wässriges Goldsulfit-Bad mit basischem pH-Wert benutzt. In den Anwendungsbeispielen 1 und 2 wird ein Goldbad mit einer Goldkonzentration von 48 g/l in einer Badmenge von 40 ml eingesetzt, das in einer dem Fachmann bekannten Weise aus einem Goldbad niedrigerer Konzentration, beispielsweise dem in Anwendungsbeispiel 3 genutzten Bad, abgeleitet ist. Bei Anwendungsbeispiel 3 wird ein AGC®-Goldbad der Anmelderin mit einer Goldkonzentration von 30 g/l (Artikel-Nr. 6781) in einer Badmenge von 50 ml verwendet. In allen drei Fällen wird ein AGC®-Glanzzusatz der Anmelderin zugegeben, bei den Anwendungsbeispielen 1 und 2 Glanzzusatz Artikel-Nr. 6624 (4-fach konzentriert) in einer Menge von 3 ml pro Kathodenteil, im Fall von Anwendungsbeispiel 3 Glanzzusatz Artikel-Nr. 6674 in einer Menge von 4 ml pro Kathodenteil.

Die Galvanisierbedingungen bei den drei Anwendungsbeispielen waren wie folgt:

| Anwendungsbeispiel 1 | |
|---|---|
| Galvanisierzeit: | 2 Stunden |
| Galvanisiertemperatur: | ca. 70 °C |
| rechteckige Pulsform Pulsstromdichte | 3,6 A/dm² |
| prozentuale Pulsdauer: | 86 % |
| Dauer der Strompulse: | 24 ms |
| Dauer der Strompausen: | 4 ms |

| Anwendungsbeispiel 2 | |
|---|---|
| Galvanisierzeit: | 1 Stunde |
| Galvanisiertemperatur: rechteckige Pulsform | ca. 70 °C |
| Pulsstromdichte | 7,3 A/dm² |
| prozentuale Pulsdauer: | 88 % |
| Dauer der Strompulse: | 24 ms |
| Dauer der Strompausen: | 4 ms |

| Anwendungsbeispiel 3 | |
|---|---|
| Galvanisierzeit: | 4 Stunden |
| Galvanisiertemperatur: | ca. 70 °C |
| rechteckige Pulsform Pulsstromdichte | 1,6 A/dm² |
| prozentuale Pulsdauer: | 88 % |
| Dauer der Strompulse: | 72 ms |
| Dauer der Strompausen: | 12 ms |

In allen drei Anwendungsbeispielen wurden goldfarbene, hochglänzende Galvanokronen mit extrem glatter Oberfläche erhalten. Die Schichtdicke von ca. 200 µm ist über die gesamte Galvanokrone hinweg sehr gleichmäßig mit einwandfreiem Schichtaufbau. Das jeweilige Gefüge ist ebenfalls sehr gleichmäßig mit feinkörniger Struktur, frei von Blasen und Löchern. Alle drei Galvanokronen sind bei der keramischen Verblendung brennstabil.

## Patentansprüche

1. Verfahren zur Herstellung von prothetischen Formteilen für den Dentalbereich, insbesondere von Dentalgerüsten, mit Hilfe galvanischer Abscheidung von Gold oder einer Goldlegierung, bei dem die galvanische Abscheidung mindestens teilweise, vorzugsweise vollständig durch Pulsstromabscheidung (pulse-plating) erfolgt, dass wobei die galvanische Abscheidung aus einem Goldsulfit-Bad bei einer Impulsstromdichte zwischen 0,2 A/dm² und 50 A/dm² erfolgt und die prozentuale Pulsdauer, d.h. das Verhältnis der Zeit, in der Strom fließt, zur Gesamtdauer der Abscheidung in Prozent, mindestens 50 % beträgt.

2. Verfahren nach Anspruch 1, **dadurch gekennzeichnet, dass** die galvanische Abscheidung in einem Zeitraum von weniger als 5 Stunden, vorzugsweise weniger als 3 Stunden, abgeschlossen ist.

3. Verfahren nach Anspruch 2, **dadurch gekennzeichnet, dass** die galvanische Abscheidung innerhalb von 1 bis 2 Stunden abgeschlossen ist.

4. Verfahren nach einem der vorhergehenden Ansprüche, **dadurch gekennzeichnet, dass** die prozentuale Pulsdauer mindestens 70 % beträgt.

5. Verfahren nach einem der vorhergehenden Ansprüche, **dadurch gekennzeichnet, dass** rechteckförmige oder rampenförmige Stromimpulse, insbesondere scharf begrenzte rechteckförmige Stromimpulse vorgesehen sind.

6. Verfahren nach einem der vorhergehenden Ansprüche, **dadurch gekennzeichnet, dass** die Impulsstromdichte zwischen 3 A/dm² und 8 A/dm² beträgt.

7. Verfahren nach einem der vorhergehenden Ansprüche, **dadurch gekennzeichnet, dass** die Dauer der Stromimpulse und/oder der Strompausen im Millisekunden-Bereich vorgesehen ist.

8. Verfahren nach Anspruch 7, **dadurch gekennzeichnet, dass** die Dauer der Stromimpulse mindestens 1 ms, vorzugsweise 20 ms bis 100 ms, beträgt.

9. Verfahren nach Anspruch 7 oder Anspruch 8, **dadurch gekennzeichnet, dass** die Dauer der Strompausen mindestens 1 ms, vorzugsweise 4 ms bis 12 ms, beträgt.

10. Verfahren nach einem der vorhergehenden Ansprüche, **dadurch gekennzeichnet, dass** das prothetische Formteil mit einer Dicke von mindestens 100 µm, vorzugsweise mit einer Dicke zwischen 150 µm und 300 µm, abgeschieden wird.

11. Verfahren nach einem der vorhergehenden Ansprüche, **dadurch gekennzeichnet, dass** die galvanische Abscheidung aus einem wässrigen Goldsulfit-Bad erfolgt.

12. Verfahren nach einem der vorhergehenden Ansprüche, **dadurch gekennzeichnet, dass** das Goldsulfit-Bad eine Goldkonzentration von mehr als 30 g/l, vorzugsweise eine Goldkonzentration zwischen 40 g/l und 60 g/l besitzt.

13. Verwendung der Pulsstromabscheidung (pulse-plating) für galvanische Abscheidung von Gold oder einer Goldlegierung zur Herstellung prothetischer Formteile für den Dentalbereich, **dadurch gekennzeichnet, dass** die galvanische Abscheidung aus einem Goldsulfit-Bad bei einer Impulsstromdichte zwischen 0,2 A/dm² und 50 A/dm² erfolgt und die prozentuale Pulsdauer, d.h. das Verhältnis der Zeit, in der Strom fließt, zur Gesamtdauer der Abscheidung in Prozent, mindestens 50 % beträgt.

14. Verwendung nach Anspruch 13, weiter **gekennzeichnet durch** mindestens eines der Merkmale der kennzeichnenden Teile der Ansprüche 2 bis 12.

## Claims

1. Method for manufacturing prosthetic elements for the dental field, in particular dental frames, with the aid of electroplating of gold or a gold alloy, in which the electroplating is carried out at least in part, preferably completely, by pulse plating, the electroplating taking place from a gold sulphite bath at a pulse current density of between 0.2 A/dm² and 50 A/dm², and the percentage pulse duration, i.e. the ratio of the time during which current is flowing to the total duration of the plating in per cent, being at least 50%.

2. Method according to Claim 1, **characterized in that** the electroplating has ended within a period of less than 5 hours, preferably less than 3 hours.

3. Method according to Claim 2, **characterized in that** the electroplating has ended within 1 to 2 hours.

4. Method according to one of the preceding claims, **characterized in that** the percentage pulse duration is at least 70%.

5. Method according to one of the preceding claims, **characterized in that** square-wave or ramp current pulses, in particular sharply defined square-wave current pulses, are provided.

6. Method according to one of the preceding claims, **characterized in that** the pulse current density is between 3 A/dm² and 8 A/dm².

7. Method according to one of the preceding claims, **characterized in that** the duration of the current pulses and/or of the interpulse periods is provided to be in the millisecond range.

8. Method according to Claim 7, **characterized in that** the duration of the current pulses is at least 1 ms, preferably 20 ms to 100 ms.

9. Method according to Claim 7 or Claim 8,
**characterized in that** the duration of the interpulse periods is at least 1 ms, preferably 4 ms to 12 ms.

10. Method according to one of the preceding claims, **characterized in that** the prosthetic element is deposited to a thickness of at least 100 µm, preferably to a thickness of between 150 µm and 300 µm.

11. Method according to one of the preceding claims, **characterized in that** the electroplating takes place from an aqueous gold sulphite bath.

12. Method according to one of the preceding claims, **characterized in that** the gold sulphite bath has a gold concentration of more than 30 g/l, preferably a gold concentration of between 40 g/l and 60 g/l.

13. Use of pulse plating for electroplating of gold or a gold alloy for manufacturing prosthetic elements for the dental field, **characterized in that** the electroplating takes place from a gold sulphite bath at a pulse current density of between 0.2 A/dm² and 50 A/dm², and the percentage pulse duration, i.e. the ratio of the time during which current is flowing to the total duration of the plating in per cent, is at least 50%.

14. Use according to Claim 13, also **characterized by** at least one of the features of the characterizing clauses of Claims 2 to 12.

## Revendications

1. Procédé pour fabriquer des pièces usinées prothétiques pour le secteur dentaire, notamment des châssis dentaires à l'aide de la précipitation galvanique de l'or ou d'un alliage de l'or, avec lequel la précipitation galvanique s'effectue au moins partiellement, de préférence intégralement par précipitation par courant pulsé (pulse-plating), la précipitation galvanique s'effectuant ici à partir d'un bain de sulfite d'or avec une densité de courant impulsionnel comprise entre 0,2 A/dm² et 50 A/dm² et le pourcentage de durée des impulsions, c'est à dire le rapport entre le temps pendant lequel circule un courant et la durée totale de la précipitation en pour-cent est au moins égal à 50 %.

2. Procédé selon la revendication 1, **caractérisé en ce que** 1a précipitation galvanique est terminée en une période inférieure à 5 heures, de préférence inférieure à 3 heures.

3. Procédé selon la revendication 2, **caractérisé en ce que** la précipitation galvanique est terminée en 1 à 2 heures.

4. Procédé selon l'une des revendications précédentes, **caractérisé en ce que** le pourcentage de durée des impulsions est au moins de 70 %.

5. Procédé selon l'une des revendications précédentes, **caractérisé en ce que** les impulsions de courant prévues sont de forme rectangulaire ou en forme de rampe, plus précisément de forme rectangulaire et sont nettement séparées.

6. Procédé selon l'une des revendications précédentes, **caractérisé en ce que** la densité du courant impulsionnel est comprise entre 3 A/dm² et 8 A/dm².

7. Procédé selon l'une des revendications précédentes, **caractérisé en ce que** la durée prévue des impulsions de courant et/ou des interruptions du courant se situe dans la plage des millisecondes.

8. Procédé selon la revendication 7, **caractérisé en ce que** la durée des impulsions de courant est au moins de 1 ms, de préférence comprise entre 20 ms et 100 ms.

9. Procédé selon la revendication 7 ou 8, **caractérisé en ce que** la durée des interruptions de courant est au moins de 1 ms, de préférence comprise entre 4 ms et 12 ms.

10. Procédé selon l'une des revendications précédentes, **caractérisé en ce que** la pièce usinée prothétique est précipitée avec une épaisseur d'au moins 100 µm, de préférence une épaisseur comprise entre 150 µm et 300 µm.

11. Procédé selon l'une des revendications précédentes, **caractérisé en ce que** la précipitation galvanique s'effectue à partir d'un bain de sulfite d'or aqueux.

12. Procédé selon l'une des revendications précédentes, **caractérisé en ce que** le bain de sulfite d'or possède une concentration en or supérieure à 30 g/l, de préférence une concentration en or comprise entre 40 g/l et 60 g/l.

13. Application de la précipitation par courant pulsé (pulse-plating) pour la précipitation galvanique de l'or ou d'un alliage de l'or pour fabriquer des pièces usinées prothétiques pour le secteur dentaire, **caractérisée en ce que** la précipitation galvanique est effectuée à partir d'un bain de sulfite d'or avec une densité de courant impulsionnel comprise entre 0,2 /dm² et 50 A/dm² et le pourcentage de durée des impulsions, c'est à dire le rapport entre le temps pendant lequel circule un courant et la durée totale de la précipitation en pour-cent est au moins égal à 50 %.

14. Application selon la revendication 13, également **caractérisé par** au moins l'une des caractéristiques des parties caractérisantes des revendications 2 à 12.
